# EUROPEAN PATENT APPLICATION

(11) **EP 1 032 232 A2**
(43) Date of publication of application: **30.08.2000**
(21) Application number: 00103799.3
(22) Date of filing: 23.02.2000
(51) Int. Cl.: H04Q 7/38

(54) **Mobile communication system and call control method in the mobile communication system**

(30) Priority: 24.02.1999 JP 4702999
(71) Applicant: NEC CORPORATION, Tokyo (JP)
(72) Inventor: Taketsugu, Masanori, Minato-ku, Tokyo (JP)
(74) Representative: Glawe, Delfs, Moll & Partner

(57) **Abstract**

A call control method in a mobile communication system comprising a plurality of mobile apparatuses; a plurality of radio base stations, respectively allocated within a plurality of radio zones, for communicating with the mobile apparatuses by use of a radio channel within the radio zones; and a mobile communication control station for controlling the radio base stations, each of the radio base stations informing a control channel first received by a mobile apparatus approaching the radio zone of the radio base station, in which the radio base station stores identifiers of the radio zones of its own station and the other stations; receives the identifier of the radio zone where the mobile apparatus is present from the mobile apparatus approaching the radio zone and desiring soft hand-over; and allows the mobile apparatus to do multi-connection when the received identifier of the radio zone is included in the stored identifiers.

## Description

### BACKGROUNDS OF THE INVENTION

### FIELD OF THE INVENTION

The present invention relates to a call control method in a mobile communication system comprising a plurality of mobile apparatuses, a plurality of radio base stations that are respectively positioned within a plurality of radio zones, to communicate with the mobile apparatuses by use of a radio channel within each radio zone, and a mobile communication control station for controlling the radio base stations, in which each radio base station informs a control channel to be first received by a mobile apparatus approaching the radio zone of a radio base station.

### DESCRIPTION OF THE RELATED ART

The conventional mobile communication system such as an automobile telephone, a portable telephone, or the like has adopted a small zone method of covering a service area of the mobile communication system with a plurality of radio zones. A radio zone means the range of performing communication between each radio base station and a mobile apparatus mounted on an automobile or the like by use of a radio channel.

One radio base station is allocated in one radio zone, and a plurality of mobile apparatuses freely move to each radio zone. Each radio base station always informs a mobile apparatus of the information such as the identifier of its own station, a radio channel used, and the like through a radio channel for control called a pilot channel. Each mobile apparatus receives the first pilot channel when moving in the radio zones of the respective radio base stations, thereby to collect the information of the radio base stations in its vicinity.

In making a call, each mobile apparatus issues a call to a radio base station presenting the greatest field strength in the information of the radio base stations collected as mentioned above, and starts communication. Further, each radio base station is allowed to use a plurality of radio channels and decide which radio channel to use according to the radio wave propagation environment between a mobile apparatus to communicate with and itself. Moreover, when the radio wave propagation environment of a radio channel at use becomes worse during communication, it is allowed to switch to another radio channel. This is called channel switching during communication (hand-over).

Further, a method is considered, in which a mobile apparatus is multi-connected to a plurality of radio base stations by sending the same signal from the plurality of radio base stations to the mobile apparatus so as not to interrupt communication when switching a radio channel at the time of hand-over, and the mobile apparatus decides a received signal according to the signals received from the plurality of radio base stations ("Hand-Over Method Using Micro Diversity in Microcell", Shingakugihou RCS93-86, 1994, written by Ekihito Akehi, Hiroyuki Morikawa, Moriji Mizumachi), and this is called diversity hand-over.

In the mobile communication system of the Code Division Multiple Access (CDMA), such diversity hand-over may be sometimes called soft hand-over. In the IS-95 system that is the mobile communication system of the CDMA method in North America, a pilot channel is transmitted by a constant transmission power, and in a mobile apparatus, the information of the pilot channels in the radio zones in its vicinity is called a vicinal radio zone set and a set of radio base stations simultaneously connected by the mobile apparatus is called an active set, thereby to control a radio base station to be connected at the time of soft hand-over.

When the transmission power of a pilot channel is made constant, if the communication and control traffic within and without a radio zone varies, receiving quality of the pilot channel varies in a mobile apparatus and according to this, the size of the radio zone varies. Therefore, it is necessary to consider a control method for making the size of a radio zone constant at a call for a terminal, without depending on traffic.

When a mobile apparatus sends a request to connect to a radio base station which it wants to multi-connect to, based on the vicinal radio zone set, the desired radio base station judges whether it can permit the multi-connection or not in view of the communication quality in consideration of the volume of the communication traffic in itself, and informs the mobile apparatus of the result.

However, a communication signal and a control signal for this multi-connection causes deterioration in the communication quality, and in this call control method, a mobile apparatus in the middle of soft hand-over and a mobile apparatus making a new call are treated as the same one, thereby to increase call loss rate.

### SUMMARY OF THE INVENTION

An object of the present invention is to provide a call control method and a mobile communication system in which, in the state of heavy traffic, a radio base station can give permission for soft hand-over to a mobile apparatus present in the radio zone of a radio base station of higher necessity.

According to the first aspect of the invention, a call control method in a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, including the following steps of:
in the radio base station, storing identifiers of the radio zones of its own station and the other stations,
receiving the identifier of the radio zone where a mobile apparatus is present from the mobile apparatus approaching the radio zone and requesting soft hand-over, and
allowing the mobile apparatus to do multi-connection when the received identifier of the radio zone is included in the stored identifiers.

In the preferred construction, the radio base station decreases the total of the stored identifiers of the radio zones of its own station and the other stations when communication traffic is heavy, and increases the same total when communication traffic is light.

In another preferred construction, the radio base station increases the total of the stored identifiers of the radio zones of its own station and the other stations by one, when the ratio of call signal traffic and down communication signal traffic becomes greater than a given threshold.

In another preferred construction, the radio base station decreases the total of the stored identifiers of the radio zones of its own station and the other stations by one, when the ratio of call signal traffic and down communication signal traffic becomes smaller than a given threshold.

According to the second aspect of the invention, a call control method in a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, including the following steps:
the radio base station stores identifiers of the radio zones of its own station and the other stations and informs a mobile apparatus present in the same radio zone of the above identifiers,
a mobile apparatus approaching the radio zone and requesting soft hand-over informs the radio base station of the identifier of the radio zone where the mobile apparatus is present, when the identifier of the radio zone where the mobile apparatus is present is included in the informed identifiers of the radio zones, and
the radio base station, upon receipt of the above information, allows the mobile apparatus to do multi-connection.

In the preferred construction, the radio base station decreases the total of the stored identifiers of the radio zones of its own station and the other stations when communication traffic is heavy, and increases the same total when communication traffic is light.

In another preferred construction, the radio base station increases the total of the stored identifiers of the radio zones of its own station and the other stations by one, when the ratio of call signal traffic and down communication signal traffic becomes greater than a given threshold.

In another preferred construction, the radio base station decreases the total of the stored identifiers of the radio zones of its own station and the other stations by one, when the ratio of call signal traffic and down communication signal traffic becomes smaller than a given threshold.

According to the third aspect of the invention, a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, wherein
the mobile apparatus comprises
means for informing the identifier of the radio zone where the mobile apparatus is present and sending a soft hand-over request to the radio base station, when approaching the radio zone and desiring soft hand-over,
the radio base station comprises
means for storing identifiers of the radio zones of its own station and the other stations, and
means for, upon receipt of the soft hand-over request, judging whether the notified identifier of the radio zone is included in a group of the stored identifiers, and allowing the mobile apparatus to do multi-connection when it is included.

In the preferred construction, the radio base station has means for decreasing the total of the stored identifiers of the radio zones of its own station and the other stations when communication traffic is heavy, and increasing the same total when communication traffic is light.

In another preferred construction, the radio base station has means for increasing the total of the stored identifiers of the radio zones of its own station and the other stations by one when the ratio of call signal traffic and down communication signal traffic becomes greater than a given threshold.

In another preferred construction, the radio base station has means for decreasing the total of the stored identifiers of the radio zones of its own station and the other stations by one when the ratio of call signal traffic and down communication signal traffic becomes smaller than a given threshold.

According to another aspect of the invention, a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, in which
the radio base station comprising
means for storing identifiers of the radio zones of its own station and the other stations, and
means for informing a mobile apparatus present in the own radio zone of the stored identifier of the radio zone, and
the mobile apparatus comprises means for judging whether the identifier of the present radio zone where the own self exists is included in the informed identifiers of the radio zones when approaching the radio zone and desiring soft hand-over, and
means for informing the identifier of the present radio zone where the mobile apparatus exists and sending the soft hand-over request to the radio base station when it is included, and
the radio base station further comprises means for, upon receipt of the soft hand-over request, judging whether the informed identifier is included in the informed identifiers of the radio zones, and allowing the mobile apparatus to do multi-connection when it is included.

In the preferred construction, the radio base station comprises means for decreasing the total of the stored identifiers of the radio zones of its own station and the other stations when communication traffic is heavy, and increasing the same total when communication traffic is light.

In another preferred construction, the radio base station comprises means for increasing the total of the stored identifiers of the radio zones of its own station and the other stations by one, when the ratio of call signal traffic and down communication signal traffic becomes greater than a given threshold.

In another preferred construction, the radio base station comprises means for decreasing the total of the stored identifiers of the radio zones of its own station and the other stations by one, when the ratio of call signal traffic and down communication signal traffic becomes smaller than a given threshold.

According to another aspect of the invention, a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, in which
the mobile apparatus comprising
a transmitter/receiver which informs the identifier of the radio zone where the mobile apparatus is present and sends a soft hand-over request to the radio base station, when approaching the radio zone and desiring soft hand-over, while
the radio base station comprising
a storage which stores the identifiers of the radio zones of its own station and the other stations, and
a permitting unit which, upon receipt of the soft hand-over request, judges whether the informed identifier of the radio zone is included in a group of the stored identifiers, and allows the mobile apparatus to do multi-connection when it is included.

In the preferred construction, the radio base station comprises an updating unit which decreases the total of the stored identifiers of the radio zones of its own station and the other stations when communication traffic is heavy, and increases the same total when communication traffic is light.

In another preferred construction, the radio base station comprises an updating unit which increases the total of the stored identifiers of the radio zones of its own station and the other stations by one, when the ratio of call signal traffic and down communication signal traffic becomes greater than a given threshold.

In another preferred construction, the radio base station comprises an updating unit which decreases the total of the stored identifiers of the radio zones of its own station and the other stations by one, when the ratio of call signal traffic and down communication signal traffic becomes smaller than a given threshold.

According to further another aspect of the invention, a mobile communication system comprising a plurality of mobile apparatuses, a plurality of radio base stations, respectively allocated within a plurality of radio zones, for communicating with the mobile apparatuses by use of a radio channel within the radio zones, and a mobile communication control station for controlling the radio base stations, each of the radio base stations informing a control channel first received by a mobile apparatus approaching the radio zone of the radio base station, in which
the radio base station comprising
a storage which stores identifiers of the radio zones of its own station and the other stations; and
a transmitter/receiver which informs a mobile apparatus present in the own radio zone of the stored identifiers of the radio zones, and
the mobile apparatus comprising
a transmitter/receiver which, after judging whether the identifier of the present radio zone where the mobile apparatus exists is included in the informed identifiers of the radio zones when approaching the radio zone and desiring soft hand-over, informs the identifier of the present radio zone where the mobile apparatus exists and sends the soft hand-over request to the radio base station when it is included, and
the radio base station further comprising a permitting unit which, upon receipt of the soft hand-over request, judges whether the informed identifier is included in the informed identifiers of the radio zone, and allows the mobile apparatus to do multi-connection when it is included.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a constitutional view of a mobile communication system according to an embodiment of the present invention;
Fig. 2 shows an example of identifiers stored by a radio base station, including its own station and the other stations;
Fig. 3 shows the structure of a mobile apparatus 100;

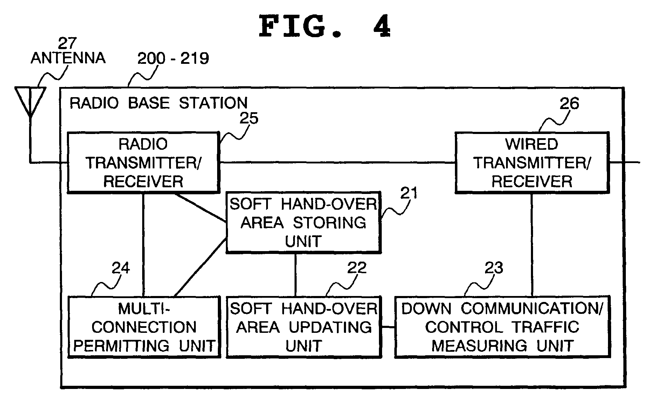

Fig. 4 shows the structure of each radio base station 200 to 219;
Fig. 5 is a flow chart showing the processing in a mobile apparatus;
Fig. 6 is a flow chart showing the processing in a radio base station;
Fig. 7 shows the format of a control signal informed by a radio base station;
Fig. 8 is a flow chart showing the processing in a mobile apparatus;
Fig. 9 shows the relation between communication traffic and the total of the stored identifiers of radio zones of own station and the other stations;
Fig. 10 shows the relation between the ratio of call signal traffic and communication signal traffic and the total of the stored identifiers of radio zones of own station and the other station;
Fig. 11 shows the relation between the ratio of call signal traffic and communication signal traffic and the total of the stored identifiers of radio zones of own station and the other stations.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

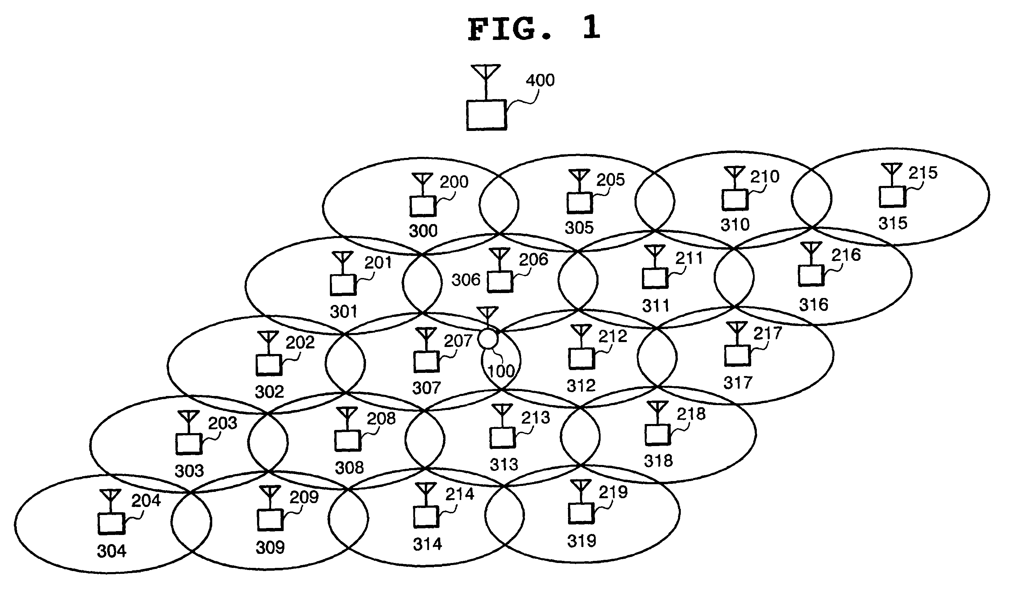

With reference to Fig. 1, a mobile communication system according to an embodiment of the present invention comprises a mobile apparatus 100, radio base stations 200 to 219, respectively allocated in radio zones 300 to 319, for communicating with the mobile apparatus 100 within the above radio zones by use of a radio channel, a mobile communication control station 400 for controlling the radio base stations 200 to 219. The identifiers of the radio zones 300 to 319 are respectively defined as Z300 to Z319. The identifiers may be added to each sector of each radio base station.

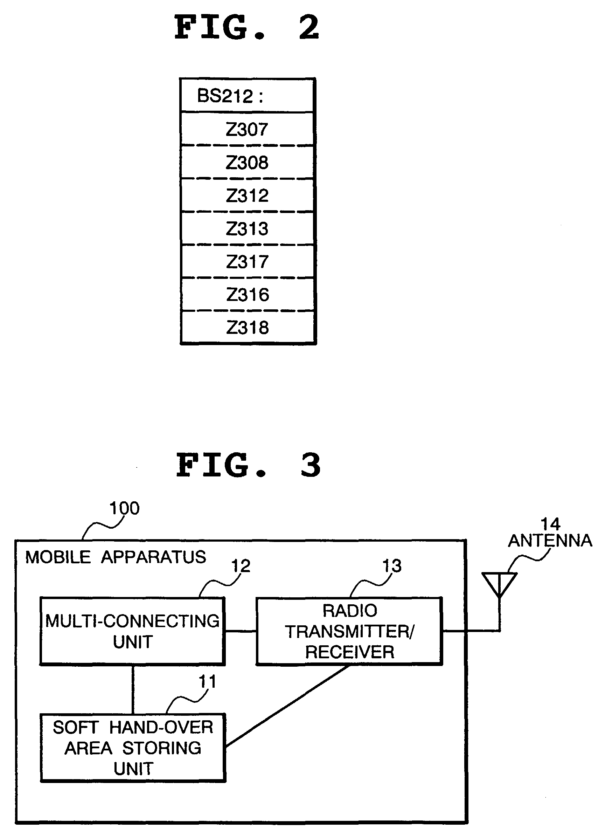

Fig 2 is an example of a group of identifiers of radio zones, stored by the radio base station as a soft hand-over, including its own station and the other radio base stations. The radio base station 212 that the mobile apparatus 100 is approaching stores the radio zone identifier Z312 of its own and the radio zone identifiers Z307, Z308, Z313, Z316, Z317, and Z318 of the other stations as the soft hand-over area.

The structure of the mobile apparatus 100, and the radio base stations 200 to 219 will be described. The mobile apparatus 100 comprises a soft hand-over area storing unit 11 for storing a soft hand-over area, a multi-connecting unit 12 for requesting a multi-connection, a radio transmitter/receiver 13, and an antenna 14. Each of the radio base stations 200 to 219 comprises a soft hand-over area storing unit 21 for storing a soft hand-over area, a soft hand-over area updating unit 22 for updating a soft hand-over area, a down communication/control traffic measuring unit 23, a multi-connection permitting unit 24 for permitting a multi-connection, a radio transmitter/receiver 25, a wired transmitter/receiver 26, and an antenna 27.

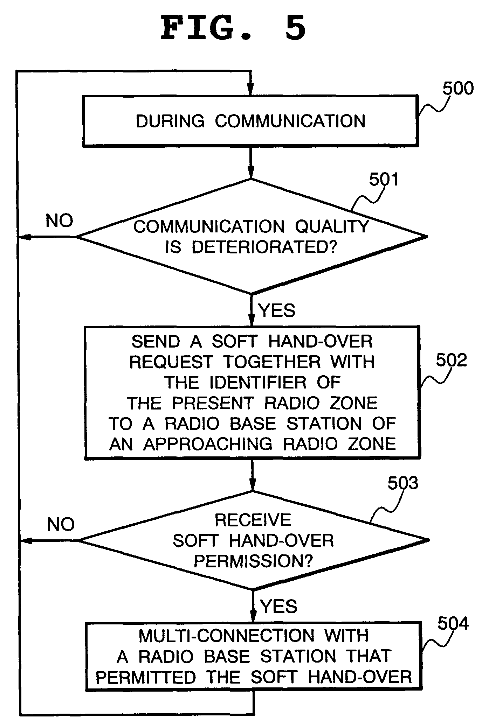

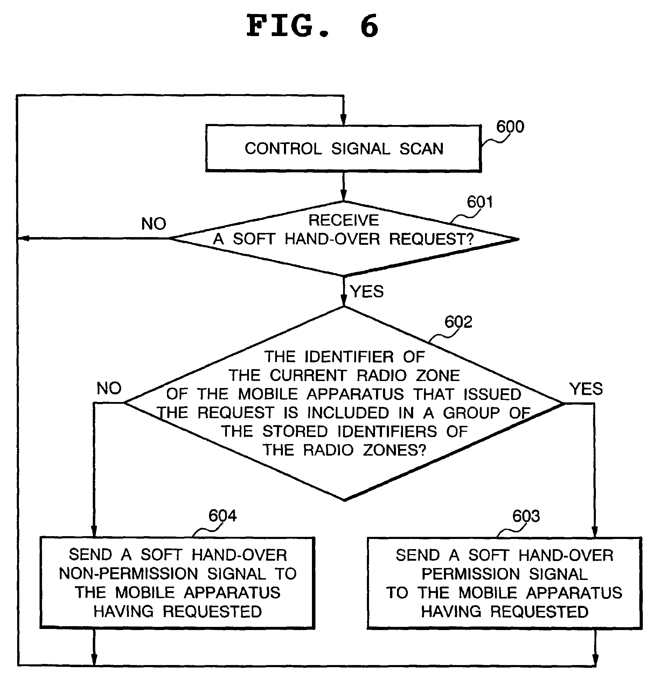

Fig. 5 and Fig. 6 are flow charts respectively showing the operation of the radio base station 212 that the mobile apparatus 100 belongs to, according to the embodiment.

In Fig. 5, the mobile apparatus 100 judges whether the communication quality is deteriorated or not (Step 501) during communication (Step 500), by the radio transmitter/receiver 13. When the communication quality is deteriorated more than a predetermined value, the mobile apparatus 100 issues a soft hand-over request together with the identifier Z307 of the radio zone where it is present, to the radio base station 212 within the radio zone 312 which it is approaching, through the radio transmitter/receiver 13 (Step 502). Thereafter, upon receipt of a soft hand-over permission signal from the radio base station 212, through the radio transmitter/receiver 13 (Step 503), it continues communication, while establishing a multi-connection to the radio base station 212 having permitted, by the multi-connecting unit 12 (Step 504).

On the other hand, when the mobile apparatus 100 receives a soft hand-over non-permission signal from the radio base station 212, or when it couldn't receive a soft hand-over permission signal at a given elapse (No in Step 503), it continues communication without any new multi-connection.

In Fig. 6, the radio base station 212 always scans a control signal from an existing or approaching mobile apparatus through the radio transmitter/receiver 25 (Step 600). When it receives a soft hand-over request together with the radio zone identifier Z307 where the mobile apparatus 100 is present, from the same mobile apparatus 100 (Step 601), the radio base station 212 judges by the multi-connection permitting unit 24, whether the above existing radio zone identifier Z307 is included in the group of radio zone identifiers forming a soft hand-over area as shown in Fig. 2, that is stored in the soft hand-over area storing unit 21 of its own station (Step 602).

In this case, since the above existing radio zone identifier Z307 is included in the group of radio zone identifiers being stored as mentioned above, it sends a soft hand-over permission signal to the mobile apparatus 100 through the radio transmitter/receiver 25 (Step 603). On the other hand, when the above existing radio zone identifier Z307 is not included in the above group of the radio zone identifiers (No in Step 602), it sends a soft hand-over non-permission signal to the mobile apparatus having sent the request (Step 604).

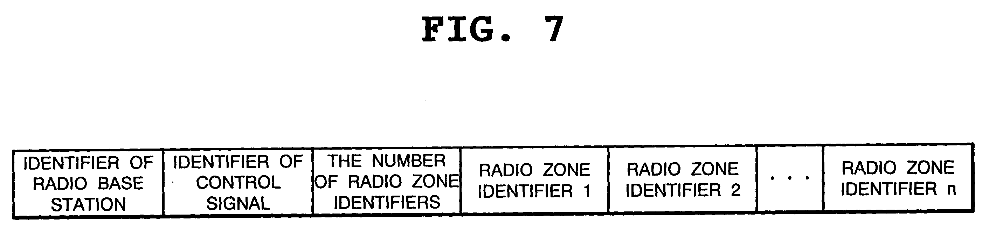

Fig. 7 shows an example of format of a control signal informed by a radio base station as a soft hand-over area, according to a call control method of a second embodiment of the present invention. In Fig. 7, a control signal informed by a radio base station as a soft hand-over area consists of an identifier of the own radio base station, a control signal identifier indicating the type of the control signal, the number of radio zone identifiers indicating the total of the informed radio zone identifiers, and each radio zone identifier stored by the radio base station.

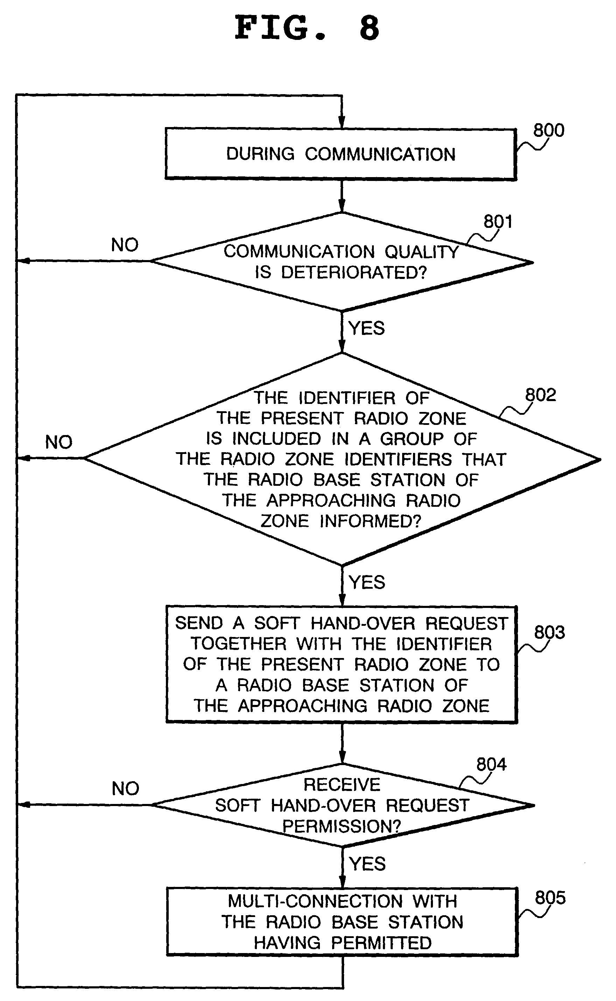

Fig. 8 is a flow chart of a mobile apparatus according to the call control method of the second embodiment.

The embodiment will be described with reference to Figs. 1, 2, 7, and 8. Assume that the mobile apparatus 100 exists within the radio zone 307 of the radio base station 207 and moves toward the radio zone 312 of the radio base station 212.

In Fig. 8, the mobile apparatus 100 measures communication quality during communication (Step 800) through the radio transmitter/receiver 13. When the communication quality is deteriorated more than a prescribed value (Step 801), it judges whether the identifier of the radio zone where it is present is included in the group of radio zone identifiers informed by the radio base station 212 of the radio zone 312 that it is approaching as a soft hand-over area (Step 802).

In this case, since it is included, the radio transmitter/receiver 13 issues a soft hand-over request together with the identifier Z307 of the radio zone where it is present, to the radio base station 212 of the radio zone 312 that it is approaching (Step 803).

Thereafter, when receiving a soft hand-over permission signal from the radio base station 212 (Step 804), it continues communication while establishing a multi-connection also to the radio base station 212 that gave the permission, through the multi-connecting unit 12 (Step 805).

On the other hand, when receiving a soft hand-over non-permission signal from the radio base station 212, or when not receiving a soft hand-over permission signal even at a given elapse (No in Step 804), it continues the existing communication without any new multi-connection in addition to Step 800.

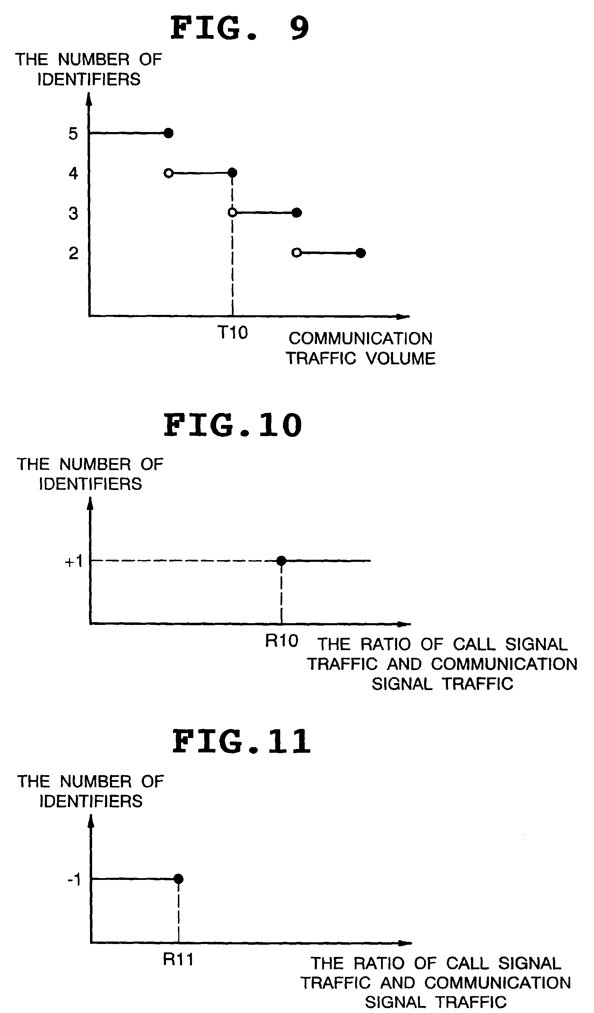

Fig. 9 shows the relation between the communication traffic volume in a radio base station and the total of identifiers of radio zones of the own station and the other stations stored as a soft hand-over area, indicating a third embodiment of the present invention.

When the communication traffic is T10 in a radio base station, the total of the radio zone identifiers stored as mentioned above is 3. When the communication traffic is heavy, the soft hand-over area updating unit 22 lessons the total of the radio zone identifiers stored in the soft hand-over area storing unit 21, and when the communication traffic is light, it increases the total of the radio zone identifiers.

Fig. 10 shows the relation between the ratio of call signal traffic and communication signal traffic in a radio base station and the total of radio zone identifiers of the own station and the other stations stored as a soft hand-over area, indicating a fourth embodiment of the present invention. When the ratio of the call signal traffic and the communication traffic is beyond the threshold R10, the soft hand-over area updating unit 22 of the radio base station increases the total of the radio zone identifiers stored in the soft hand-over area storing unit 21 by one. At this time, it is possible to consider a method of selecting a radio zone identifier to be stored newly, from the radio zone identifiers of the station where the mobile apparatus is present, sent together with a soft hand-over request to the corresponding radio base station.

Fig. 11 shows the relation between the ratio of call signal traffic and communication signal traffic in a radio base station and the total of radio zone identifiers of the own station and the other stations stored as a soft hand-over area, indicating the fourth embodiment. When the ratio of the call signal traffic and the communication traffic is under the threshold R11, the soft hand-over area updating unit 22 decreases the total of the radio zone identifiers stored in the soft hand-over area storing unit 21 by one. At this time, it is possible to consider a method of selecting a radio zone identifier having the least number of times of giving permission, from the existing radio zone identifiers, sent to the corresponding radio base station together with a soft hand-over request, as a radio zone identifier to be deleted.

According to the embodiments as mentioned above, a possibility of soft hand-over is decided depending on a radio zone where a mobile apparatus is present, and a radio base station, in the state of heavy traffic, gives a soft hand-over permission only to a mobile apparatus existing within the radio zone of a radio base station of higher necessity, thereby making it possible to reduce the call loss rate.

A radio base station lessons the total of the stored radio zone identifiers of its own station and the other stations when the communication traffic is heavy, and increases the same total when the communication traffic is light, thereby making it possible to decide a possibility as for a soft hand-over request depending on the current communication traffic of the own station.

A radio base station increases the total of the stored radio zone identifiers of its own station and the other stations by one when the ratio of the call signal traffic and the down communication signal traffic becomes greater than a threshold, thereby making it possible to decide a possibility as for a soft hand-over request while making constant the ratio of the call signal traffic and the down communication signal traffic sent by the own station.

A radio base station decreases the total of the stored radio zone identifiers of its own station and the other stations by one when the ratio of the call signal traffic and the down communication signal traffic becomes smaller than a threshold, thereby making it possible to decide a possibility as for a soft hand-over request while making constant the ratio of the call signal traffic and the down communication signal traffic sent by the own station.

As set forth hereinabove, according to the present invention, a possibility of soft hand-over is decided depending on a radio zone where a mobile apparatus is present, and a radio base station, in the state of heavy traffic, can give a permission of soft hand-over only to a mobile apparatus existing within the radio zone of a radio base station of higher necessity. This can reduce the call loss rate.

A radio base station, in the state of heavy traffic, allows only a mobile apparatus existing within the radio zone of a radio base station of higher necessity to make a soft hand-over request, thereby making it possible to reduce control signal traffic.

Further, it is possible to reduce the call loss rate of a mobile apparatus making a call within a station by increasing and decreasing the number of multi-connection at the time of soft hand-over depending on the communication traffic.

Further, it is possible to reduce the call loss rate of a mobile apparatus making a call within a station by increasing and decreasing the number of multi-connection at the time of soft hand-over depending on the communication traffic while making constant the communication quality of a call signal and the range of a call.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A call control method in a mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, including the following steps of:
in said radio base station, storing identifiers of said radio zones of its own station and the other stations;
receiving said identifier of said radio zone where a mobile apparatus is present from said mobile apparatus approaching said radio zone and requesting soft hand-over; and
allowing said mobile apparatus to do multi-connection when said received identifier of said radio zone is included in said stored identifiers.

2. A call control method as set forth in Claim 1, wherein
said radio base station
decreases the total of said stored identifiers of said radio zones of its own station and the other stations when communication traffic is heavy, and increases the same total when communication traffic is light.

3. A call control method as set forth in Claim 1, wherein
said radio base station increases the total of said stored identifiers of said radio zones of its own station and the other stations by one, when said ratio of call signal traffic and down communication signal traffic becomes greater than a given threshold.

4. A call control method as set forth in Claim 1, wherein
said radio base station decreases the total of said stored identifiers of said radio zones of its own station and the other stations by one, when the ratio of call signal traffic and down communication signal traffic becomes smaller than a given threshold.

5. A call control method in a mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, including the following steps in which:
said radio base station stores identifiers of said radio zones of its own station and the other stations and informs a mobile apparatus present in the same radio zone of said above identifiers;
a mobile apparatus approaching said radio zone and requesting soft hand-over informs said radio base station of said identifier of said radio zone where said mobile apparatus is present, when said identifier of said radio zone where said mobile apparatus is present is included in said informed identifiers of said radio zones; and
said radio base station, upon receipt of the above information, allows said mobile apparatus to do multi-connection.

6. A call control method as set forth in Claim 5, wherein
said radio base station decreases the total of said stored identifiers of said radio zones of its own station and the other stations when communication traffic is heavy, and increases the same total when communication traffic is light.

7. A call control method as set forth in Claim 5, wherein
said radio base station increases the total of said stored identifiers of said radio zones of its own station and the other stations by one, when said ratio of call signal traffic and down communication signal traffic becomes greater than a given threshold.

8. A call control method as set forth in Claim 5, wherein
said radio base station decreases the total of said stored identifiers of said radio zones of its own station and the other stations by one, when said ratio of call signal traffic and down communication signal traffic becomes smaller than a given threshold.

9. A mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, wherein
said mobile apparatus comprises
means for informing said identifier of said radio zone where said mobile apparatus is present and sending a soft hand-over request to said radio base station, when approaching said radio zone and desiring soft hand-over,
said radio base station comprises
means for storing identifiers of said radio zones of its own station and the other stations, and
means for, upon receipt of the soft hand-over request, judging whether said notified identifier of said radio zone is included in a group of said stored identifiers, and allowing said mobile apparatus to do multi-connection when it is included.

10. A mobile communication system as set forth in Claim 9, wherein
said radio base station has means for decreasing the total of said stored identifiers of said radio zones of its own station and the other stations when communication traffic is heavy, and increasing the same total when communication traffic is light.

11. A mobile communication system as set forth in Claim 9, wherein
said radio base station has means for increasing the total of said stored identifiers of said radio zones of its own station and the other stations by one when said ratio of call signal traffic and down communication signal traffic becomes greater than a given threshold.

12. A mobile communication system as set forth in Claim 9, wherein
said radio base station has means for decreasing the total of said stored identifiers of said radio zones of its own station and the other stations by one when said ratio of call signal traffic and down communication signal traffic becomes smaller than a given threshold.

13. A mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, in which
said radio base station comprising
means for storing identifiers of said radio zones of its own station and the other stations; and
means for informing a mobile apparatus present in the own radio zone of said stored identifier of said radio zone, and
said mobile apparatus comprises means for judging whether said identifier of the present radio zone where the own self exists is included in the informed identifiers of said radio zones when approaching said radio zone and desiring soft hand-over; and
means for informing said identifier of the present radio zone where said mobile apparatus exists and sending the soft hand-over request to said radio base station when it is included, and
said radio base station further comprises means for, upon receipt of the soft hand-over request, judging whether the informed identifier is included in said informed identifiers of said radio zones, and allowing said mobile apparatus to do multi-connection when it is included.

14. A mobile communication system as set forth in Claim 13, wherein
said radio base station comprises means for decreasing the total of said stored identifiers of said radio zones of its own station and the other stations when communication traffic is heavy, and increasing the same total when communication traffic is light.

15. A mobile communication system as set forth in Claim 13, wherein
said radio base station comprises means for increasing the total of said stored identifiers of said radio zones of its own station and the other stations by one, when said ratio of call signal traffic and down communication signal traffic becomes greater than a given threshold.

16. A mobile communication system as set forth in Claim 13, wherein
said radio base station comprises means for decreasing the total of said stored identifiers of said radio zones of its own station and the other stations by one, when said ratio of call signal traffic and down communication signal traffic becomes smaller than a given threshold.

17. A mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, in which
said mobile apparatus comprising
a transmitter/receiver which informs said identifier of said radio zone where said mobile apparatus is present and sends a soft hand-over request to said radio base station, when approaching said radio zone and desiring soft hand-over, while
said radio base station comprising
a storage which stores said identifiers of said radio zones of its own station and the other stations, and
a permitting unit which, upon receipt of the soft hand-over request, judges whether the informed identifier of said radio zone is included in a group of said stored identifiers, and allows said mobile apparatus to do multi-connection when it is included.

18. A mobile communication system as set forth in Claim 17, wherein
said radio base station comprises an updating unit which decreases the total of said stored identifiers of said radio zones of its own station and the other stations when communication traffic is heavy, and increases the same total when communication traffic is light.

19. A mobile communication system as set forth in Claim 17, wherein
said radio base station comprises an updating unit which increases the total of said stored identifiers of said radio zones of its own station and the other stations by one, when said ratio of call signal traffic and down communication signal traffic becomes greater than a given threshold.

20. A mobile communication system as set forth in Claim 17, wherein
said radio base station comprises an updating unit which decreases the total of said stored identifiers of said radio zones of its own station and the other stations by one, when said ratio of call signal traffic and down communication signal traffic becomes smaller than a given threshold.

21. A mobile communication system comprising a plurality of mobile apparatuses, a plurality of radio base stations, respectively allocated within a plurality of radio zones, for communicating with said mobile apparatuses by use of a radio channel within said radio zones, and a mobile communication control station for controlling said radio base stations, each of said radio base stations informing a control channel first received by a mobile apparatus approaching said radio zone of said radio base station, in which
said radio base station comprising
a storage which stores identifiers of said radio zones of its own station and the other stations; and
a transmitter/receiver which informs a mobile apparatus present in the own radio zone of said stored identifiers of said radio zones, and
said mobile apparatus comprising
a transmitter/receiver which, after judging whether said identifier of the present radio zone where said mobile apparatus exists is included in the informed identifiers of said radio zones when approaching said radio zone and desiring soft hand-over, informs said identifier of the present radio zone where said mobile apparatus exists and sends the soft hand-over request to said radio base station when it is included, and
said radio base station further comprising a permitting unit which, upon receipt of the soft hand-over request, judges whether said informed identifier is included in said informed identifiers of said radio zone, and allows said mobile apparatus to do multi-connection when it is included.

22. A mobile communication system as set forth in Claim 21, wherein
said radio base station comprising an updating unit which decreases the total of said stored identifiers of said radio zones of its own station and the other stations when communication traffic is heavy, and increases the same total when communication traffic is light.

23. A mobile communication system as set forth in Claim 21, wherein
said radio base station comprising an updating unit which increases the total of said stored identifiers of said radio zones of its own station and the other stations by one, when said ratio of call signal traffic and down communication signal traffic becomes greater than a given threshold.

24. A mobile communication system as set forth in Claim 21, wherein
said radio base station comprising an updating unit which decreases the total of said stored identifiers of said radio zones of its own station and the other stations by one, when said ratio of call signal traffic and down communication signal traffic becomes smaller than a given threshold.
